# EUROPEAN PATENT SPECIFICATION

(11) **EP 4 407 344 B1**
(45) Date of publication and mention of the grant of the patent: **03.09.2025**
(21) Application number: 23217470.6
(22) Date of filing: 18.12.2023
(51) Int. Cl.: G01S 7/52, G01S 7/539, G01S 15/87, G01S 15/931

(54) **VEHICULAR OBSTACLE-DETECTION APPARATUS**
VORRICHTUNG ZUR HINDERNISERKENNUNG IN EINEM FAHRZEUG
APPAREIL DE DÉTECTION D'OBSTACLE DE VÉHICULE

(30) Priority: 30.01.2023 JP 2023011837
(43) Date of publication of application: 31.07.2024
(73) Proprietor: Suzuki Motor Corporation, Hamamatsu-shi, Shizuoka 432-8611 (JP)
(72) Inventor: GOTO, Hiroyuki, Hamamatsu-shi, 432-8611 (JP)
(74) Representative: Haseltine Lake Kempner LLP

(56) References cited:
- EP-A1- 3 051 309
- EP-B1- 3 195 009

## Description

### BACKGROUND OF THE INVENTION

### Field of the Invention

The present invention relates to a vehicular obstacle-detection apparatus (i.e., obstacle detection apparatus for a vehicle).

### Description of the Related Art

In a known vehicular technique, an ultrasonic sensor is used to detect an obstacle behind the own vehicle and a warning of the obstacle is issued to the driver.

[Patent Document 1] JP 5794381 B2

However, in vehicles such as a truck, which has a loading platform at its rear and is configured to be able to open and close the loading platform to the side or to the rear by using a movable gate called a "gate plate", when the movable gate (hereinafter referred to as "the rear gate") configured to open the loading platform rearward is in the open state, it is conceivable that the rear gate interferes with the ultrasonic wave emitted by the ultrasonic sensor and the ultrasonic sensor detects the rear gate as an obstacle so as to cause an erroneous warning. In such a case, there is a concern that a warning may be unnecessarily issued despite absence of the actual obstacle behind the vehicle and this warning may cause the driver to feel inconvenienced. As a countermeasure for this, though it is conceivable to install an additional sensor configured to detect that the rear gate is in the open state, this countermeasure has a disadvantage that the installation of the additional sensor increases the manufacturing cost.

EP 3195009 B1 discloses a method for operating an ultrasonic sensor device of a motor vehicle, wherein a transmission signal is emitted and at least one echo of the transmission signal is received in at least one measurement cycle by means of at least one ultrasonic sensor of a plurality of ultrasonic sensors of the ultrasonic sensor device in order to detect an object in a environment region of the motor vehicle and a region for arranging a towing device of the motor vehicle is masked out by means of a control device in the detection of the object, wherein the ultrasonic sensor device is operated for a predetermined duration in a sensing mode, in which a presence of the towing device on the motor vehicle is detected on the basis of the at least one received echo and the region is adjusted in accordance with the presence of the towing device.

EP 3051309 A1 discloses a method for detecting the surroundings of a vehicle with at least one group of at least two sensors, wherein the vehicle temporarily has at least one component which projects into a detection range of at least one of the sensors of the group.

### SUMMARY OF THE INVENTION

In view of the above-described circumstances, an object of the present invention is to provide a vehicular obstacle-detection apparatus that can avoid a situation of inconveniencing the driver due to unnecessary implementation of an obstacle countermeasure such as a warning by using a relatively inexpensive configuration without installing an additional sensor.

In order to solve the above-mentioned problem, according to one aspect of the present invention, a vehicular obstacle-detection apparatus is provided. In this aspect, the vehicular obstacle-detection apparatus includes a plurality of ultrasonic sensors configured to emit ultrasonic waves toward the rear of a vehicle, and a rear gate switchable to an open position in which propagation of the ultrasonic waves emitted by the ultrasonic sensors in a transmission direction is at least partially obstructed by the rear gate. The vehicular obstacle-detection apparatus further includes an obstacle detection unit configured to detect an obstacle existing behind the vehicle based on respective outputs from the ultrasonic sensors, and an obstacle countermeasure unit configured to implement a predetermined countermeasure against the obstacle when the obstacle is detected by the obstacle detection unit. The plurality of ultrasonic sensors include a first ultrasonic sensor and a second ultrasonic sensor configured to emit ultrasonic waves to respective portions of the rear gate in the open position, the portion irradiated with an ultrasonic wave from the second ultrasonic sensor being different from the portion irradiated with an ultrasonic wave from the first ultrasonic sensor. The rear gate in the open position reflects an ultrasonic wave emitted by the second ultrasonic sensor with lower reflection intensity than reflection intensity of an ultrasonic wave emitted by the first ultrasonic sensor. Implementation of the predetermined countermeasure by the obstacle countermeasure unit is avoided or stopped when a difference between reflection intensity of the ultrasonic wave detected by the first ultrasonic sensor and reflection intensity of the ultrasonic wave detected by the second ultrasonic sensor becomes larger than a predetermined value.

The obstacle countermeasure unit may be configured to issue, as the predetermined countermeasure, a warning to prompt a driver or a passenger of the vehicle to recognize that the obstacle is detected by the obstacle detection unit.

An angle of an ultrasonic incident direction with respect to a first portion of the rear gate, which is a portion to be irradiated with an ultrasonic wave emitted by the first ultrasonic sensor, may be different from an angle of an ultrasonic incident direction with respect to a second portion of the rear gate, which is a portion to be irradiated with an ultrasonic wave emitted by the second ultrasonic sensor.

The rear gate may be provided with a protrusion that is formed in the first portion and extends rearward from the rear gate in a closed position. In this case, the protrusion may form an incident point in the first portion, which is an incident point of the ultrasonic wave emitted by the first ultrasonic sensor toward the first portion, ahead of an incident point in the second portion in a front-rear direction of the vehicle, which is an incident point of the ultrasonic wave emitted by the second ultrasonic sensor toward the second portion, under a state where the rear gate is in the open position. Preferably, the protrusion differentiates the angle of an ultrasonic incident direction with respect to the first portion from the angle of an ultrasonic incident direction with respect to the second portion, and also forms the incident point in the first portion of the ultrasonic wave from the first ultrasonic sensor ahead of the incident point in the second portion of the ultrasonic wave from the second ultrasonic sensor.

Preferably, a straight line connecting the first ultrasonic sensor and the first portion is perpendicular to a reflection surface of the ultrasonic wave on the protrusion.

Preferably, a straight line connecting the first ultrasonic sensor and the first portion and a straight line connecting the second ultrasonic sensor and the second portion extend in a front-rear direction of the vehicle, and are parallel to each other.

An ultrasonic wave to be emitted by the first ultrasonic sensor may be higher in intensity than an ultrasonic wave to be emitted by the second ultrasonic sensor.

The first ultrasonic sensor may be located on an inner side in a vehicle width direction and the second ultrasonic sensor may be located on an outer side in the vehicle width direction.

The rear gate may be configured to open and close a loading platform of the vehicle. The rear gate may be provided with a rotating shaft formed in a vehicle width direction along a floor surface of the loading platform, and surround the floor surface in a closed position. The rear gate may be configured to be rotatable about the rotating shaft from the closed position to the open position in a direction of falling backward. The plurality of ultrasonic sensors may be provided below the rotating shaft, and arranged side by side in the vehicle width direction on a rear wall of the vehicle extending in the vehicle width direction.

### EFFECT OF THE INVENTION

According to one aspect of the present invention, when a difference in detected ultrasonic reflection intensity between the first and second ultrasonic sensors becomes larger than a predetermined value, implementation of a countermeasure for an obstacle is automatically avoided or stopped, and this control can prevent the rear gate in the open state from being erroneously detected as an obstacle and thereby can avoid unnecessary implementation of the countermeasure such as a warning.

### BRIEF DESCRIPTION OF THE DRAWINGS

In the accompanying drawings:
Fig. 1 is a perspective view of a vehicle body of a vehicle provided with an obstacle detection apparatus according to one embodiment of the present invention, as viewed obliquely from the rear left;
Fig. 2 is a rear view of the vehicle body shown in Fig. 1, as viewed from the rear.
Fig. 3 is a cross-sectional view of the vehicle body (loading platform) shown in Fig. 1, taken along the line A-A of Fig. 2;
Fig. 4 is a side view of an undercarriage (loading platform) shown in Fig. 1, as viewed from the left;
Fig. 5A and Fig. 5B are schematic diagrams illustrating interference with ultrasonic waves by the rear gate in the open position;
Fig. 6 is a schematic table illustrating relationship between signal intensity (i.e., reflection intensity) of the reflected wave and the distance detected on the basis of the reflected wave, for each of the inner and outer ultrasonic sensors;
Fig. 7 is a flowchart illustrating a basic flow of obstacle detection control according to one embodiment of the present invention; and
Fig. 8 is a flowchart illustrating a basic flow of the obstacle detection control according to another embodiment of the present invention.

### DETAILED DESCRIPTION

Hereinbelow, embodiments of the present invention will be described by referring to the accompanying drawings.

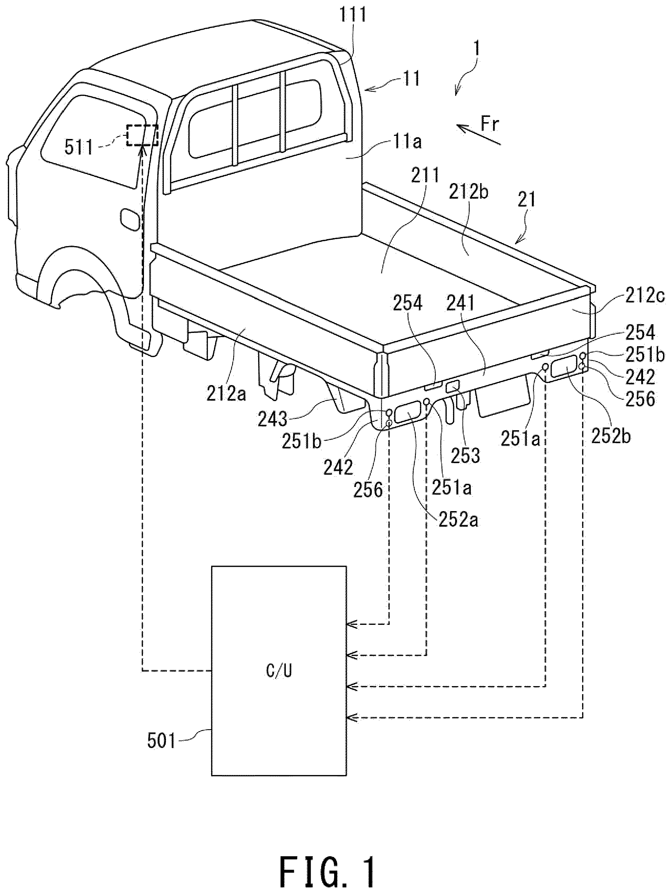

Fig. 1 is a perspective view of a vehicle body of a vehicle 1 provided with an obstacle detection apparatus according to one embodiment of the present invention, as viewed obliquely from the rear left. In Fig. 1, the arrow Fr indicates the front-rear direction of the vehicle 1. The direction in which the tip of the arrow Fr faces is the front of the vehicle 1, and the opposite direction is the rear of the vehicle 1. In the following, the right is defined as the right side when viewed from the forward direction of the vehicle 1, and the left is defined as the left side when viewed from the forward direction of the vehicle 1. Fig. 1 shows the vehicle body of the vehicle 1 as well as the schematic configuration of the obstacle detection apparatus according to the present embodiment.

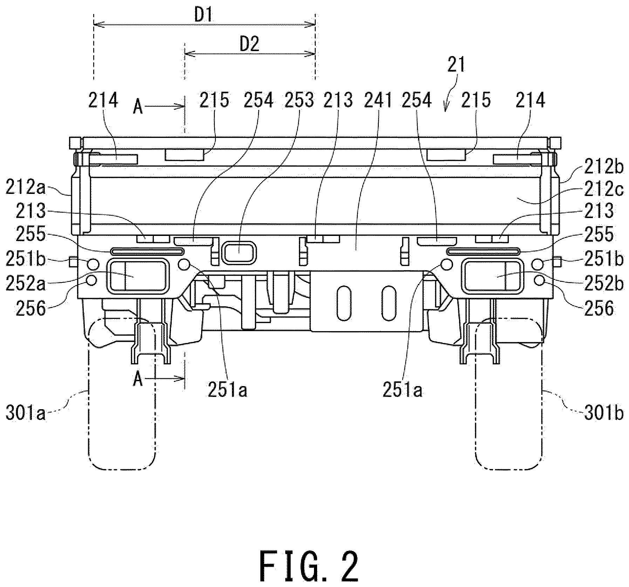

Fig. 2 is a rear view of the vehicle body of the vehicle 1 according to the present embodiment, as viewed from the rear. Fig. 2 schematically shows the left rear wheel 301a and the right rear wheel 301b as two-dot chain lines in order to facilitate understanding of relative positional relationship with the undercarriage.

The configuration of the undercarriage of the vehicle 1 according to the present embodiment will be described on the basis of Fig. 1 by referring to Fig. 2 as appropriate. As described below, the obstacle detection apparatus according to the present embodiment includes a controller 501 configured as an electronic control unit, ultrasonic sensors 251a and 251b that are external sensors for rear monitoring, and an alarm 511 installed inside a cabin 11.

The vehicle 1 according to the present embodiment is a flat-body truck, and includes the cabin 11 and a loading platform 21 disposed behind the cabin 11. Inside the cabin 11, a driver's seat is provided.

The loading platform 21 has a flat floor surface 211 on which cargoes and/or items are loaded. This floor surface 211 is surrounded by a rear surface 11a of the cabin 11 and movable gates 212a, 212b, and 212c, which can be opened and closed and are referred to as "the gate plates", from four direction including the front, rear, left, and right. Hereinafter, the movable gate on the left side is referred to as the left gate plate or the left side gate 212a, the movable gate on the right side is referred to as the right gate plate or the right side gate 212b, and the movable gate on the rear side is referred to as the rear gate plate or the rear gate 212c. A load-rest 111 is attached to the rear surface 11a of the cabin 11. When an elongated item such as a plank is loaded in a state of leaning against something, the load-rest 111 can be used as a support for the item.

The floor surface 211 extends rearward from the rear surface 11a of the cabin 11, and has a rectangular shape that is long in the front-rear direction when viewed from above. The floor surface 211 is formed from a metal plate, and both side portions in the vehicle width direction of the floor surface 211 are supported from below by both side members (not shown), which are part of the undercarriage and extend in the front-rear direction of the vehicle 1.

Each of the left side gate 212a and the right side gate 212b is formed of a metal plate which is in a rectangular shape as a whole, and extends in the front-rear direction over the entire length of the floor surface 211. The left side gate 212a and the right side gate 212b are rotatably supported with respective to the floor surface 211 by respective hinges (not shown) attached to the left and right edges of the floor surface 211, and are rotatable about each hinge between the closed position and the open position.

The left side gate 212a stands perpendicular to the floor surface 211 in the closed position, and partitions the left edge of the loading space above the floor surface 211.

The right side gate 212b stands perpendicular to the floor surface 211 in the closed position, and partitions the right edge of the loading space above the floor surface 211.

Each of the left side gate 212a and the right side gate 212b can be moved from the closed position to the open position by rotating 90° about the hinge in the direction of falling outward or sideways. In the open position, the left side gate 212a lies parallel to the floor surface 211, i.e., horizontally, and opens the floor surface 211 to the left. In the open position, the right side gate 212b lies parallel to the floor surface 211, i.e., horizontally, and opens the floor surface 211 to the right.

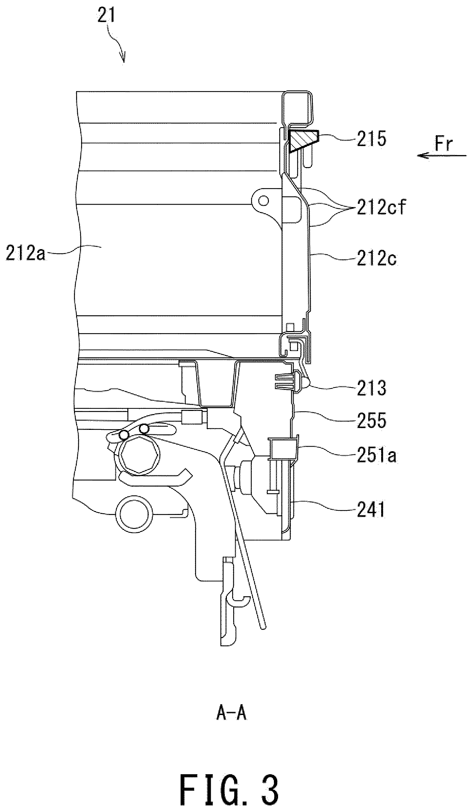

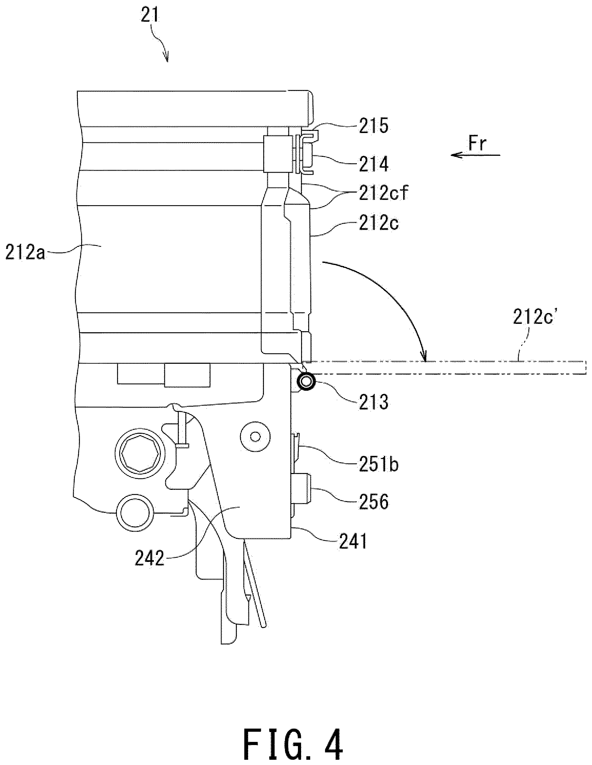

Fig. 3 is a cross-sectional view of the undercarriage (loading platform 21) of the vehicle 1 according to the present embodiment, taken along the line A-A of Fig. 2. Fig. 4 is a side view of the undercarriage (loading platform 21) of the vehicle 1, as viewed from the left. In the following description, in addition to Fig. 1 and Fig. 2, Fig. 3 and Fig. 4 will be referred to as appropriate.

The rear gate 212c is formed of a metal plate which is in a rectangular shape as a whole, and extends in the vehicle width direction over the entire width of the floor surface 211. As shown in Fig. 2, the rear gate 212c is in the state of being rotatably supported with respect to the floor surface 211 by a hinge 213 attached to the rear end of the floor surface 211, and is rotatable about the hinge 213 between the closed position and the open position. In the closed position, the rear gate 212c stands perpendicular to the floor surface 211, contacts the respective rear ends of the left side gate 212a and the right side gate 212b, and partitions the rear edge of the loading space above the floor surface 211.

The rear gate 212c is provided with handle-type manual operation units 214 at both ends in the vehicle width direction. The rear gate 212c is held in the closed position by engaging latches attached to the manual operation units 214 to respective hooks provided on the left and right side gates 212a and 212b. In other words, both manual operation units 214, the latches, and the hooks constitute a locking mechanism that holds the rear gate 212c in the closed position.

The rear gate 212c can be moved from the closed position to the open position by removing the latches of the manual operation units 214 from the hooks and then being rotated 90° about the hinge 213 in the direction of falling outward or rearward. In the open position, the rear gate 212c lies parallel to the floor surface 211, i.e., horizontally similarly to the left side gate 212a and the right side gate 212b, and opens the floor surface 211 rearward. In Fig. 4, the rear gate 212c' in the open position is indicated by a two-dot chain line.

In addition to the above-described components, the loading platform 21 further includes: a rear hanging portion 241 extending vertically downward from the rear end of the floor surface 211 below the rear gate 212c; and two side hanging portions 242 that are connected to both ends in the vehicle width direction of the rear hanging portion 241 and extend forward from the rear end of the floor surface 211. The side hanging portions 242 are located below the rear ends of the left side gate 212a and the right side gate 212b and behind the left and right rear fenders 243. In the present embodiment, the rear hanging portion 241 and the side hanging portions 242 are integrally formed and surround the space directly below the rear end of the floor surface 211 from three directions including the left, right, and rear. The rear hanging portion 241 constitutes "a rear wall" according to the present embodiment.

In the present embodiment, the rear hanging portion 241 is provided with a plurality of ultrasonic sensors 251a and 251b for rear monitoring, tail lamp units 252a and 252b, a back lamp 253, and a rear reflector 254.

As shown in Fig. 2, the plurality of ultrasonic sensors 251a and 251b are spaced apart in the vehicle width direction and are installed at the rear of the vehicle 1 so as to be able to emit ultrasonic waves. In terms of the position in the front-rear direction and the position in the height direction of the vehicle 1, the ultrasonic sensors 251a and 251b are the same.

In the present embodiment, a total of four ultrasonic sensors 251a and 251b are installed, including: the two inner ultrasonic sensors 251a installed on the inner side, which is proximal to the center axis extending in the front-rear direction of the vehicle 1, and the two outer ultrasonic sensors 251b installed on the outer side which is distal to the center axis. The two inner ultrasonic sensors 251a are arranged at equal distances from the center axis of the vehicle 1, one of both is on the left side of the center axis, and the other of both is on the right side of the center axis. The two outer ultrasonic sensors 251b are also arranged at equal distances from the center axis of the vehicle 1, one of both is on the left side of the center axis, and the other of both is on the right side of the center axis.

In other words, the distance D1 between each outer ultrasonic sensor 251b and the center axis is longer than the distance D2 between each inner ultrasonic sensor 251a and the center axis. The two inner and outer ultrasonic sensors 251a and 251b on the left side are disposed so as to sandwich the left tail lamp unit 252a from left and right. The two inner and outer ultrasonic sensors 251a and 251b on the right side are disposed so as to sandwich the right tail lamp unit 252b from left and right.

Each inner ultrasonic sensors 251a constitutes a "first ultrasonic sensor" according to the present embodiment, and each outer ultrasonic sensor 251b constitutes a "second ultrasonic sensor" according to the present embodiment.

In this manner, when the plurality of ultrasonic sensors 251a and 251b are aligned in the vehicle width direction and arranged at intervals, ultrasonic waves can be emitted over a wide range in the vehicle width direction and obstacles behind the vehicle 1 can be detected over the entire width of the vehicle 1. In the present embodiment, the interval between ultrasonic sensors adjacent to each other in the vehicle width direction is set in such a manner that the irradiation ranges of the respective ultrasonic waves partially overlap. Specifically, on the left side, the ultrasonic irradiation range of the inner ultrasonic sensor 251a partially overlaps the ultrasonic irradiation range of the outer ultrasonic sensor 251b, and the same holds true for the right side. Further, the respective ultrasonic irradiation ranges of the two inner ultrasonic sensors 251a partially overlap each other.

Moreover, in the present embodiment, the intensity of the ultrasonic waves (hereinafter sometimes abbreviated as ultrasonic intensity) to be emitted from the two ultrasonic sensors 251a arranged on the inner side is set higher than that of the two ultrasonic sensors 251b arranged on the outer side. The ultrasonic intensity is defined by the amplitude of the ultrasonic wave emitted by the ultrasonic sensor 251a or 251b. That is, in the present embodiment, high ultrasonic intensity means that the amplitude of this ultrasonic wave is large. The ultrasonic intensity can be enhanced by increasing the output of the ultrasonic sensors 251a and 251b, i.e., by increasing the power to be supplied to the transducers of the ultrasonic sensors 251a and 251b. When the ultrasonic intensity is differentiated between the inner ultrasonic sensors 251a and the outer ultrasonic sensors 251b, the reach distance of the ultrasonic wave under the same frequency can be changed. The embodiment is not limited to this aspect, and the respective ultrasonic intensities of the inner ultrasonic sensors 251a and the outer ultrasonic sensors 251b may be set to be equal to each other. Additionally or alternatively, the ultrasonic intensity of the ultrasonic waves to be emitted from the outer ultrasonic sensors 251b may be set higher than that of the inner ultrasonic sensors 251a.

The tail lamp units 252a and 252b integrally include: a tail lamp configured to light up at night in conjunction with a headlamp (not shown); a brake light configured to light up at the time of applying the brake; and a turn lamp configured to light up at the time of turning right, turning left, or changing the traveling direction.

The back lamp 253 is lighted up when the shift lever is shifted to the R range for backward running, and is intended to illuminate the rear of the vehicle 1.

The rear reflector 254 reflects light emitted from the rear of the vehicle 1 for causing the driver of the following vehicle to recognize the presence of the own vehicle and its width.

Furthermore, on the rear hanging portion 241, convexities 255 and buffer protrusions 256 are formed.

The convexities 255 ensure the rigidity of the portions formed by the tail lamp units 252a and 252b in the rear hanging portion 241. The convexities 255 protrude from the surface of the rear hanging portion 241, have a rectangular or oval shape elongated in the vehicle width direction, and are provided on the respective left and right sides of the center axis of the vehicle 1. In the present embodiment, the convexities 255 are formed near the tail lamp units 252a and 252b and between the hinge 213 and the tail lamp units 252a and 252b.

Both buffer protrusions 256 are provided at both edges of the rear hanging portion 241 in the vehicle width direction, and protrude rearward from the surface of the rear hanging portion 241. The buffer protrusions 256 are made of an elastic material such as rubber. When the rear gate 212c is rotated beyond the open position (i.e., by more than 90° from the closed position), the buffer protrusions 256 are brought into contact with the rear gate 212c earlier than the rear hanging portion 241 so as to reduce the impact on the rear hanging portion 241 and the devices installed thereon. In the present embodiment, the buffer protrusions 256 are disposed near the left and right ultrasonic sensors 251b which are disposed on the outer side.

In the present embodiment, on the rear gate 212c, protrusions 215 are formed to stand up from the outer surface 212cf of the rear gate 212c. The outer surface 212cf of the rear gate 212c is the surface that faces toward the rear of the vehicle 1 under the state where the rear gate 212c is in the closed position. The protrusions 215 stand up rearward from the outer surface 212cf under the state where the rear gate 212c is in the closed position.

As shown in Fig. 2, the protrusions 215 are provided at equal distances from the center axis of the vehicle 1 on the left and right sides. In a plan view of the vehicle 1 as viewed from above, the center of each protrusion 215 in the vehicle width direction is located on the straight line that passes through the center of the inner ultrasonic sensors 251a and extends in the front-rear direction of the vehicle 1. That is, in the present embodiment, the protrusions 215 and the inner ultrasonic sensors 251a are located at equal distances from the center axis of the vehicle 1 in the vehicle width direction. Each protrusion 215 constitutes a "protrusion" according to the present embodiment.

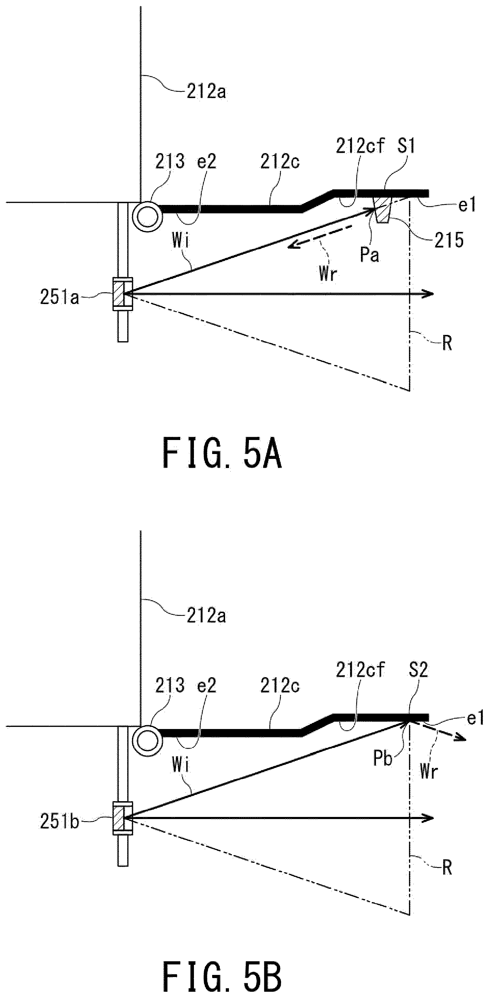

Fig. 5A and Fig. 5B schematically illustrate how the rear gate 212c in the open position interferes with the ultrasonic waves emitted by each of the inner ultrasonic sensors 251a and the outer ultrasonic sensors 251b. Fig. 5A illustrates the interference by the rear gate 212c with respect to the ultrasonic wave from the inner ultrasonic sensor 251a, and Fig. 5B illustrates the interference by the rear gate 212c with respect to the ultrasonic wave from the outer ultrasonic sensor 251b. The irradiation range R of the ultrasonic waves emitted by the inner and outer ultrasonic sensors 251a and 251b is indicated by a two-dot chain line, the propagation of this ultrasonic wave (i.e., transmission wave Wi) in the transmission direction is indicated by a solid arrow, and the propagation of this ultrasonic wave (i.e., reception wave or reflection wave Wr) in the reception or reflection direction is indicated by a dashed arrow.

In the present embodiment, when the rear gate 212c is in the open state, propagation of the ultrasonic waves emitted by the inner and outer ultrasonic sensors 251a and 251b in the transmission direction, i.e., propagation of the ultrasonic waves toward the rear of the vehicle 1 is at least partially obstructed by the rear gate 212c. In other words, the rear gate 212c in the open position partially overlaps the ultrasonic irradiation range R, and specifically, part of each ultrasonic wave (more precisely, the end of the wavefront of each ultrasonic wave) is radiated to the upper end e1 of the rear gate 212c.

As described above, each protrusion 215 is provided in the upper end e1 of the rear gate 212c behind the inner ultrasonic sensor 251a, and the ultrasonic waves emitted by the inner ultrasonic sensors 251a are radiated to the protrusions 215 (Fig. 5A). Contrastively, there is no protrusion behind each outer ultrasonic sensor 251b, and the ultrasonic waves emitted by the outer ultrasonic sensors 251b are radiated to the outer surface 212cf of the rear gate 212c (Fig. 5B).

In this manner, in the present embodiment, the positions of the ultrasonic incident points Pa and Pb with respect to the rear gate 212c are different in the front-rear direction of the vehicle 1 between the inner ultrasonic sensor 251a and the outer ultrasonic sensor 251b, and the incident point Pa of the ultrasonic wave from the inner ultrasonic sensor 251a is set ahead of the incident point point Pb of the ultrasonic waves from the outer ultrasonic sensor 251b.

Of the upper end e1 of the rear gate 212c, the portion S1 to which the ultrasonic waves emitted by the inner ultrasonic sensor 251a are radiated corresponds to "a first portion" (including the protrusion 215), and the portion S2 to which the ultrasonic waves emitted by the outer ultrasonic sensor 251b are radiated corresponds to "a second portion". In the present embodiment, the first portion S1 of the rear gate 212c is located ahead of the second portion S2.

In order to maintain signal intensity of the reflected waves and ensure the reflection intensity difference ΔIref, it is preferred that the first portion S1 is as closer as possible to the lower end e2 of the rear gate 212c (i.e., the joint portion to the hinge 213) than the second portion S2.

However, the position of the first portion S1 has the following restrictions. Each of the ultrasonic Sensors 251a and 251b converts the time length required from an emission timing of the ultrasonic wave to a reception timing of the reflected wave into the distance from the sensor to the detection target object by using acoustic velocity. Even if the voltage application to the transducers is stopped after emission of the ultrasonic wave, the ultrasonic vibration due to reverberation continues for a short time. Under the state where the detection target is close to the sensor and the ultrasonic vibration due to the reverberation remains, it is difficult to accurately determine the reception timing of the reflected wave. Thus, a certain distance is required between the sensor and the detection target such that the reception timing can be determined after attenuation of the ultrasonic vibration. Generally, a distance of about 30 cm is required.

Further, in the present embodiment, the first portion S1 and the second portion S2 are different from each other in the angle that the propagation direction of the ultrasonic waves from the ultrasonic sensors 251a and 251b (as shown by the straight arrow Wi in Fig. 5A and Fig. 5B), i.e., the normal direction of the wavefront of each ultrasonic wave respectively forms with respect to the ultrasonic irradiation surface on the rear gate 212c. Specifically, the irradiation surface in the first portion S1 makes a larger angle with respect to the ultrasonic propagation direction than the irradiation surface in the second portion S2. In other words, the ultrasonic waves to be radiated to the first portion S1 is smaller in incident angle with respect to the irradiation surface than the ultrasonic waves to be radiated to the second portion S2.

As a result, each protrusion 215 makes the signal intensity (i.e., reflection intensity) of the reflected wave from the rear gate 212c different between the ultrasonic waves emitted by each inner ultrasonic sensor 251a and the ultrasonic waves emitted by each outer ultrasonic sensor 251b. In the present embodiment, the ultrasonic irradiation surface on the rear gate 212c is formed at the protrusion 215 as the first portion S1, and is formed at the outer surface 212cf of the rear gate 212c as the second portion S2. The irradiation surface formed on the protrusion 215 is perpendicular to the propagation direction of the ultrasonic wave emitted by the inner ultrasonic sensor 251a.

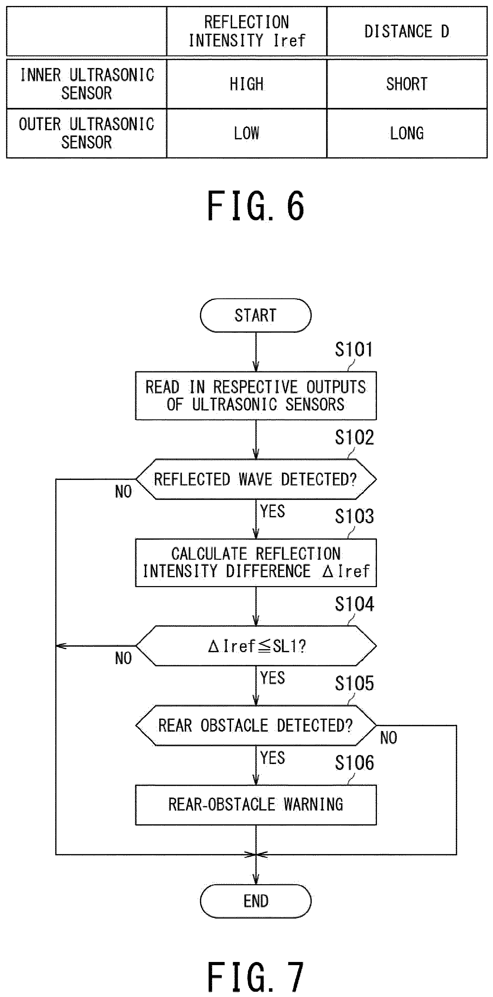

Fig. 6 illustrates the relationship between the signal intensity (i.e., reflection intensity Iref) of the reflected wave detected due to the interference by the rear gate 212c in the open position and the distance D detected according to the relationship with the acoustic velocity on the basis of the reflected wave, for each of the inner ultrasonic sensors 251a and the outer ultrasonic sensors 251b.

As shown in Fig. 6, each inner ultrasonic sensor 251a detects the reflected wave from the rear gate 212c, specifically, the ultrasonic wave reflected by the protrusion 215 with high signal intensity. Each outer ultrasonic sensor 251b detects the reflected wave from the rear gate 212c, specifically, the ultrasonic wave reflected by the outer surface 212cf with lower signal intensity than that of the reflected wave from the protrusion 215. In this manner, there is difference (hereinafter referred to as "the reflection intensity difference ΔIref") between the ultrasonic reflection intensity Iref detected by each inner ultrasonic sensor 251a and the ultrasonic reflection intensity Iref detected by each outer ultrasonic sensor 251b.

In the case of detecting reflected waves from normal obstacles to be monitored by the ultrasonic sensors 251a and 251b (i.e., obstacles behind the vehicle 1), there is no substantial difference between the ultrasonic wave detected by each inner ultrasonic sensor 251a and the ultrasonic wave detected by each outer ultrasonic sensor 251b, and thus, focusing on the reflection intensity difference ΔIref enables determination as to whether the detected reflected wave is from the rear gate 212c or from an obstacle behind the vehicle 1. In the present embodiment, if the detected reflected wave is from the rear gate 212c, on the basis of the above-described knowledge, obstacle detection based on the respective outputs from the ultrasonic sensors 251a and 251b is temporarily stopped and thereby activation of the alarm 511 is avoided.

The obstacle detection apparatus according to the present embodiment is composed of the controller 501, the ultrasonic sensors 251a and 251b, and the alarm 511. In the present embodiment, the controller 501 constitutes "an obstacle detection unit", and the controller 501 and the alarm 511 constitute "an obstacle countermeasure unit" in combination.

The controller 501 is configured as an electronic control unit by a microcomputer that includes a central processing unit (CPU), a storage device such as a ROM and a RAM, and an input/output interface, for example.

The controller 501 receives output signals from the ultrasonic sensors 251a and 251b as inputs, performs calculations described below on the basis of these output signals, and activates the alarm 511 to make the driver aware of existence of an obstacle behind the vehicle 1 in the case of detecting the obstacle behind the vehicle 1. The alarm 511 may issue an audible warning by, for example, sounding a buzzer or may issue a visual warning by, for example, displaying a message on a display. The alarm 511 may implement both the audible warning and the visual warning.

Fig. 7 is a flowchart illustrating a basic flow of the obstacle detection control according to the present embodiment. In the present embodiment, the obstacle detection control is repeatedly executed by the controller 501 at predetermined time intervals after the vehicle 1 is started by, for example, the driver's operation on a start button.

In the step S101, the controller 501 reads in the respective output signals from the ultrasonic sensors 251a and 251b.

In the step S102, on the basis of the respective output signals from the ultrasonic sensors 251a and 251b, it is determined whether a reflected wave with intensity equal to or larger than a predetermined level is received or not. In the present embodiment, reception of the reflected wave is determined by reception by either one of the ultrasonic sensors 251a and 251b. If the reflected wave is received, the processing proceeds to the step S103. If the reflected wave is not received, the current control is completed.

In the step S103, the reflection intensity difference ΔIref is detected as the difference between the signal intensity Iref of the reflected wave detected by the inner ultrasonic sensor(s) 251a and the signal intensity Iref of the reflected wave detected by the outer ultrasonic sensor(s) 251b. The reflection intensity difference ΔIref may be detected as the difference in signal intensity Iref between the reflected wave detected by one of the two inner ultrasonic sensors 251a and the reflected wave detected by one of the two outer ultrasonic sensors 251b. Additionally, the reflection intensity difference ΔIref may be detected as difference between the average value of the respective reflection intensities obtained by the two inner ultrasonic sensors 251a and the average value of the respective reflection intensities obtained by the two outer ultrasonic sensors 251b.

In the step S104, it is determined whether the detected reflection intensity difference ΔIref is equal to or smaller than a predetermined value SL1. If the detected reflection intensity difference ΔIref is equal to or smaller than the predetermined value SL1, the processing proceeds to the step S105. If it is larger than the predetermined value SL1, the current control is completed. In other words, if the detected reflection intensity difference ΔIref is larger than the predetermined value SL1, it is determined that the reception of the reflected wave is due to the interference by the rear gate 212c in the open position, and the current control is completed without executing the processing of the subsequent steps S105 and S106.

In the step S105, it is determined whether an obstacle behind the vehicle 1 (hereinafter referred to as a "rear obstacle") is detected or not. For example, the time length from the emission timing of the ultrasonic waves to the reception timing of the reflected waves received by the ultrasonic sensors 251a and 251b is measured, and this measured value is converted into the distance to the obstacle by using acoustic velocity. If the distance to the obstacle is short, the rear obstacle is detected. If the rear obstacle is detected, the processing proceeds to the step S106. Otherwise, the current control is completed without executing the processing of the step S106.

In the step S106, the alarm 511 is activated to make the driver aware that the rear obstacle exists.

The processing from the steps S102 to S105 in the flowchart of Fig. 7 corresponds to the processing to be executed by the controller 501 as "the obstacle detection unit" according to the present embodiment, and the processing of the step S106 corresponds to the processing to be executed by the controller 501 as "the obstacle countermeasure unit" according to the present embodiment.

The vehicular obstacle-detection apparatus according to the present embodiment has the above-described configuration. The effects to be obtained by the present embodiment will be described below.

Firstly, the plurality of ultrasonic sensors, i.e., the inner ultrasonic sensors 251a and the outer ultrasonic sensors 251b are installed, and the signal intensity of the ultrasonic wave to be reflected by the rear gate 212c in the open position or state is differentiated between the inner ultrasonic sensors 251a and the outer ultrasonic sensors 251b. If the difference in ultrasonic reflection intensity between the inner ultrasonic sensor(s) 251a and the outer ultrasonic sensor(s) 251 becomes larger than the predetermined value, obstacle-detection based on the respective outputs from the ultrasonic sensors 251a and 251b is temporarily stopped. This control avoids erroneously detecting the rear gate 212c in the open state as an obstacle, thereby prevents unnecessary implementation of a countermeasure such as a warning, and consequently, can avoid a situation of inconveniencing the driver due to unnecessary implementation of the countermeasure, with a small number of components and a relatively inexpensive configuration without using an additional or dedicated sensor.

When an obstacle is detected, issue of a warning by the alarm 511 can prompt the vehicle occupant such as the driver and the passenger to recognize the fact that the obstacle has been detected, and can ensure safety during driving. When the difference in reflection intensity becomes larger than the predetermined value, implementation of the warning is avoided or stopped, and thus, implementation of the warning based on erroneous detection due to the interference by the rear gate 212c can be avoided.

Secondly, the ultrasonic irradiation range on the rear gate 212c is differentiated between the inner ultrasonic sensors 251a and the outer ultrasonic sensors 251b, and the angle of the ultrasonic incident direction with respect to the first portion S1 to be irradiated with the ultrasonic waves from the inner ultrasonic sensors 251a is differentiated from the angle of the ultrasonic incident direction with respect to the second portion S2 to be irradiated with the ultrasonic waves from the outer ultrasonic sensors 252a. Such a configuration can readily differentiate the ultrasonic reflection intensity Iref between the inner and outer ultrasonic sensors 251a and 251b, and can cause a relatively large difference in reflection intensity Iref (i.e., reflection intensity difference ΔIref) between both.

Thirdly, the protrusion 215 is formed on the first portion S1 of the rear gate 212c, the incident point Pa of the ultrasonic wave from the inner ultrasonic sensor 251a toward the first portion S1 is set on this protrusion 215, and the incident point Pa of the ultrasonic wave from the inner ultrasonic sensor 251a is formed further ahead of (i.e., in front of) the incident point Pb of the ultrasonic waves from the outer ultrasonic sensor 251b toward the second portion S2. This configuration easily and clearly differentiates the ultrasonic reflection intensity Iref to be detected between the inner and outer ultrasonic sensors 215a and 251b because of the shape of the rear gate 212c, specifically, because of the compatibility of the cross-sectional shape of the rear gate 212c.

Fourthly, the first portion S1 and the second portion S2 are located on a straight line that passes through the respective ultrasonic sensors 251a and 251b and extends in the front-rear direction of the vehicle 1, and this arrangement enables satisfactory reception of the reflected waves from the protrusions 215 while enabling satisfactory detection of the rear obstacles, and can ensure a sufficient reflection intensity difference ΔIref between the inner ultrasonic sensor 251a and the outer ultrasonic sensor 251b.

Fifthly, the straight line connecting the inner ultrasonic sensor 251a and the first portion S1 is perpendicular to the ultrasonic irradiation surface on the protrusion 215, i.e., the ultrasonic reflection surface on the protrusion 215, and thus, the ultrasonic wave emitted by the inner ultrasonic sensor 251a is made incident on the protrusion 215 perpendicularly and reflected. Hence, the ultrasonic reflection intensity Iref from the inner ultrasonic sensor 251a is particularly enhanced, and consequently, a sufficient reflection intensity difference ΔIref can be ensured between the inner and outer ultrasonic sensors 251a and 251b.

Sixthly, the intensity of the ultrasonic waves to be emitted by the inner ultrasonic sensors 251a is made higher than the intensity of the ultrasonic waves to be emitted by the outer ultrasonic sensors 251b, and this setting allows more intense ultrasonic waves to be reflected by the protrusions 215 and can increase the reflection intensity difference ΔIref between the inner and outer ultrasonic sensors 251a and 251b.

Since the ultrasonic sensors 251a configured to emit relatively high-intensity ultrasonic waves are disposed on the inner side in the vehicle width direction and the ultrasonic sensors 251b configured to emit relatively low-intensity ultrasonic waves are disposed on the outer side in the vehicle width direction, a sufficient detection distance can be secured for obstacles behind the vehicle by using high-intensity ultrasonic waves (i.e., ultrasonic waves from the inner ultrasonic sensors 251a), and increase in manufacturing costs can be suppressed as compared with the case of uniformly increasing the intensity of the ultrasonic waves to be emitted by all the ultrasonic sensors 251a and 251b.

Furthermore, the intensity of the ultrasonic waves to be emitted by the outer ultrasonic sensors 251b is lowered, and this setting can avoid unnecessary detection of an obstacle, which is on the side of the vehicle 1 and outside the range of the detection, by the outer ultrasonic sensors 251b, and can avoid inconvenience of unnecessary implementation of the countermeasure such as a warning.

Seventhly, the inner ultrasonic sensors 251a and the outer ultrasonic sensors 251b are installed side by side in the vehicle width direction below the rotating shaft of the rear gate 212c, and this configuration enables the plurality of ultrasonic sensors 251a and 251b to monitor a wide range in the vehicle width direction while ensuring a satisfactory field of view especially in the vertical direction, and consequently, obstacles can be detected over a wide range in the vehicle width direction.

In the above description, when the reception of the reflected wave is due to the interference by the rear gate 212c in the open position, the activation of the alarm 511 is avoided by temporarily stopping detection of obstacles (step S104 in the flowchart of Fig. 7). The embodiments are not limited to this aspect. When a reflection intensity difference ΔIref exceeding the predetermined value SL1 is detected, the controller 501 may determine the rear gate 212c to be in the open position or open state and visually or audibly produce some output for notifying the driver of the detection that the rear gate 212c is in the open position.

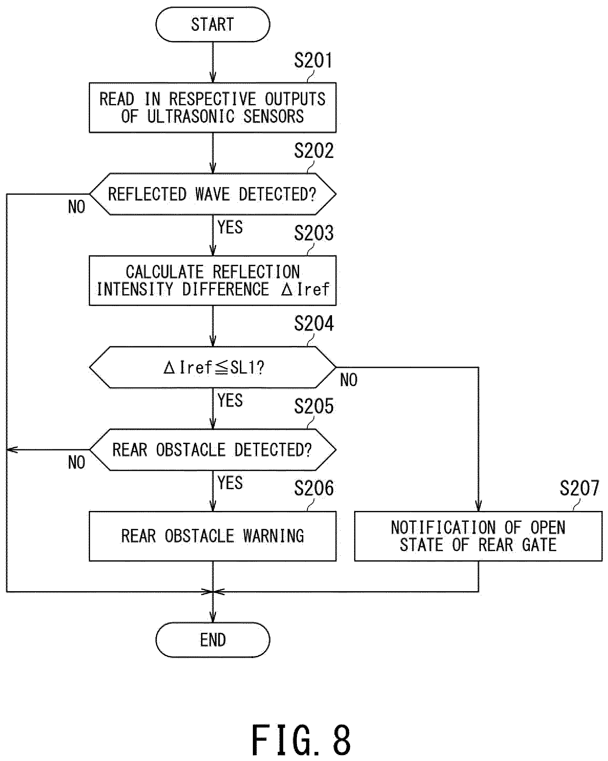

Fig. 8 is a flowchart illustrating a basic flow of the obstacle detection control according to another embodiment of the present invention as an application aspect in the above-described case.

The processing in the steps S201, S202, S203, S205, and S206 is the same as the processing to be performed in the steps S101, S102, S103, S105, and S106 in the flowchart of Fig. 7, respectively. That is, the output signals from the ultrasonic sensors 251a and 251b are read in (in the step S201), and if the reflected wave is received (in the step S202), the reflection intensity difference ΔIref is detected (in the step S203). It is determined (in the step S204) whether the detected reflection intensity difference ΔIref is equal to or smaller than the predetermined value SL1. If it is equal to or smaller than the predetermined value SL1, the processing proceeds to the step S205. Otherwise, the processing proceeds to the step S207.

In the step S205, it is determined whether a rear obstacle is detected or not. If a rear obstacle is detected, the processing proceeds to the step S206 in which the alarm 511 is activated so as to make the driver aware of existence of the rear obstacle. In the step S207, the alarm 511 is activated to notify the driver that the rear gate 212c is in the open position. In this case, the alarm 511 is operated in an operation mode different from the operation mode for the case where a rear obstacle is detected (in the step S206), thereby the driver is made aware that the rear gate 212c is in the open position, as distinguished from the case where a rear obstacle is present. For example, the alarm 511 outputs different sound or the warning light display is changed to a different aspect.

The processing of the steps S202 and S205 in the flowchart of Fig. 8 corresponds to the processing to be executed by the controller 501 as "the obstacle detection unit" according to the present embodiment, and the processing of the steps S203, S204, S206, and S207 corresponds to the processing to be executed by the controller 501 as the "the obstacle countermeasure unit" according to the present embodiment.

According to the present embodiment, countermeasures suitable for the situation can be implemented depending on whether a rear obstacle exists and whether the rear gate 212c is in the open position. Specifically, when a reflection intensity difference ΔIref exceeding the predetermined value SL1 is detected, it is determined that the rear gate 212c is in the open position, and the alarm 511 is activated in an operation mode different from the operation mode for the case where a rear obstacle is detected. For example, a continuous warning sound is issued to provide a high level warning to the driver when a rear obstacle exists, whereas an intermittent warning sound is issued to alert the driver when the rear gate 212c is in the open position.

Although the protrusions 215 are formed on the rear gate 212c to generate the reflection intensity difference ΔIref in the above description, the embodiments are not limited to this aspect. The difference in reflection intensity Iref between the inner ultrasonic sensors 251a and the outer ultrasonic sensors 251b can be increased beyond the predetermined value by adjusting the shape of the rear gate 212c or the inclination of each component, for example, by adjusting the shape or inclination of the outer surface 212cf.

Although the protrusions 215 are disposed on the inner side close to the center axis of the vehicle 1 and the flat portions of the outer surface of the rear gate 212c are formed on the outer side in the above description, the embodiments are not limited to this aspect. The protrusions 215 can be disposed on the outer side and the flat portions can be formed on the inner side. In this case, the ultrasonic reflection intensity Iref to be detected by the outer ultrasonic sensors 251b is higher than the ultrasonic reflection intensity Iref to be detected by the inner ultrasonic sensors 251a.

Together with the above-described configuration, the intensity of the ultrasonic waves to be emitted by the outer ultrasonic sensors 251b can be set higher than the intensity of the ultrasonic waves to be emitted by the inner ultrasonic sensors 251a. Under the state where the protrusions 215 are disposed on the inner side and the flat portions of the outer surface of the rear gate 212c are formed on the outer side, the intensity of the ultrasonic waves from the outer ultrasonic sensors 251b can also be set to be higher than that of the ultrasonic waves from the inner ultrasonic sensors 251a.

Furthermore, countermeasures in the case of having detected a rear obstacle include not only activation of the alarm 511 but also: a method in which the vehicle 1 is prohibited from reversing in addition to or instead of the activation of the alarm 511; and another method in which the vehicle 1 is allowed to move backward but the drive torque to be applied to the axle during backward running is limited in addition to or instead of the activation of the alarm 511.

### REFERENCE SIGNS LIST

- 1: vehicle
- 11: cabin
- 11a: rear surface of the cabin
- 111: load-rest
- 21: loading platform
- 211: floor surface of the loading platform
- 212a, 212b: side gate of the loading platform
- 212c: rear gate of the loading platform
- 213: hinge
- 214: manual operation unit of a lock mechanism
- 215: protrusion
- 241: rear wall
- 242: side wall
- 243: rear fender
- 251a: inner ultrasonic sensor (first ultrasonic sensor)
- 251b: outer ultrasonic sensor (second ultrasonic sensor)
- 252a, 252b: tail lamp unit
- 253: backlight
- 254: rear reflector
- 301a, 301b: rear wheel
- 501: controller
- 511: alarm

## Claims

1. A vehicular obstacle-detection apparatus that is provided with: a plurality of ultrasonic sensors (251a, 251b) configured to emit ultrasonic waves toward the rear of a vehicle (1); and a rear gate (212c) switchable to an open position in which propagation of the ultrasonic waves emitted by the ultrasonic sensors (251a, 251b) in a transmission direction is at least partially obstructed by the rear gate,
the vehicular obstacle-detection apparatus comprising:
an obstacle detection unit (501) configured to detect an obstacle existing behind the vehicle (1) based on respective outputs from the ultrasonic sensors (251a, 251b);
an obstacle countermeasure unit (511) configured to implement a predetermined countermeasure against the obstacle when the obstacle is detected by the obstacle detection unit (501), wherein:
the plurality of ultrasonic sensors (251a, 251b) include a first ultrasonic sensor (251a) and a second ultrasonic sensor (251b) configured to emit ultrasonic waves to respective portions of the rear gate in the open position, the portion irradiated with an ultrasonic wave from the second ultrasonic sensor (251b) being different from the portion irradiated with an ultrasonic wave from the first ultrasonic sensor (251a);
the rear gate (212c) in the open position reflects an ultrasonic wave emitted by the second ultrasonic sensor (251b) with lower reflection intensity than reflection intensity of an ultrasonic wave emitted by the first ultrasonic sensor (251a); and
implementation of the predetermined countermeasure by the obstacle countermeasure unit (511) is avoided or stopped when a difference between reflection intensity of the ultrasonic wave detected by the first ultrasonic sensor (251a) and reflection intensity of the ultrasonic wave detected by the second ultrasonic sensor (251b) becomes larger than a predetermined value.

2. The vehicular obstacle-detection apparatus according to claim 1,
wherein the obstacle countermeasure unit (511) is configured to issue a warning to prompt a driver or a passenger of the vehicle (1) to recognize that the obstacle is detected by the obstacle detection unit (501).

3. The vehicular obstacle-detection apparatus according to claim 1 or claim 2,
wherein an angle of an ultrasonic incident direction with respect to a first portion (S1) of the rear gate (212c) is different from an angle of an ultrasonic incident direction with respect to a second portion (S2) of the rear gate (212c),
the first portion (S1) being a portion to be irradiated with an ultrasonic wave emitted by the first ultrasonic sensor (251a),
the second portion (S2) being a portion to be irradiated with an ultrasonic wave emitted by the second ultrasonic sensor (251b).

4. The vehicular obstacle-detection apparatus according to claim 3, wherein:
the rear gate (212c) has a protrusion (215) that is formed in the first portion (S1) and extends rearward from the rear gate (212c) in a closed position; and
the protrusion (215) forms an incident point in the first portion (S1) ahead of an incident point in the second portion (S2) in a front-rear direction of the vehicle under a state where the rear gate (212c) is in the open position,
the incident point in the first portion (S1) being an incident point of the ultrasonic wave emitted by the first ultrasonic sensor (251a) toward the first portion (S1),
the incident point in the second portion (S2) being an incident point of the ultrasonic wave emitted by the second ultrasonic sensor (251b) toward the second portion (S2).

5. The vehicular obstacle-detection apparatus according to claim 4,
wherein a straight line connecting the first ultrasonic sensor (251a) and the first portion (S1) is perpendicular to a reflection surface of the ultrasonic wave on the protrusion (215).

6. The vehicular obstacle-detection apparatus according to any one of claim 3 to claim 5,
wherein a straight line connecting the first ultrasonic sensor (251a) and the first portion (S1) and a straight line connecting the second ultrasonic sensor (251b) and the second portion (S2) extend in a front-rear direction of the vehicle (1) and are parallel to each other.

7. The vehicular obstacle-detection apparatus according to any one of claim 1 to claim 6,
wherein an ultrasonic wave to be emitted by the first ultrasonic sensor (251a) is higher in intensity than an ultrasonic wave to be emitted by the second ultrasonic sensor (251b) .

8. The vehicular obstacle-detection apparatus according to any one of claim 1 to claim 7,
wherein the first ultrasonic sensor (251a) is located on an inner side in a vehicle width direction and the second ultrasonic sensor (251b) is located on an outer side in the vehicle width direction.

9. The vehicular obstacle-detection apparatus according to any one of claim 1 to claim 8, wherein:
the rear gate (212c) is configured to open and close a loading platform (21) of the vehicle (1), has a rotating shaft formed in a vehicle width direction along a floor surface (211) of the loading platform (21), surrounds the floor surface (211) in a closed position, and is configured to be rotatable about the rotating shaft from the closed position to the open position in a direction of falling backward; and
the plurality of ultrasonic sensors (251a, 251b) are provided below the rotating shaft and are arranged side by side in the vehicle width direction on a rear wall (241) that is part of the vehicle (1) and extends in the vehicle width direction.

## Patentansprüche

1. Fahrzeug-Hinderniserkennungsvorrichtung, die mit Folgendem bereitgestellt ist: einer Vielzahl von Ultraschallsensoren (251a, 251b), die dazu konfiguriert sind, Ultraschallwellen in Richtung des Hecks eines Fahrzeugs (1) auszusenden; und eine Heckklappe (212c), die in eine Offenstellung schwenkbar ist, in der die Ausbreitung der von den Ultraschallsensoren (251a, 251b) in einer Übertragungsrichtung ausgesendeten Ultraschallwellen zumindest teilweise durch die Heckklappe behindert wird,
wobei die Fahrzeug-Hinderniserkennungsvorrichtung Folgendes umfasst:
eine Hinderniserkennungseinheit (501), die dazu konfiguriert ist, ein sich hinter dem Fahrzeug (1) befindliches Hindernis auf Grundlage der jeweiligen Ausgangssignale der Ultraschallsensoren (251a, 251b) zu erkennen;
eine Hindernisgegenmaßnahmeneinheit (511), die dazu konfiguriert ist, eine vorbestimmte Gegenmaßnahme gegen das Hindernis zu implementieren, wenn das Hindernis durch die Hinderniserkennungseinheit (501) erkannt wird, wobei:
die Vielzahl von Ultraschallsensoren (251a, 251b) einen ersten Ultraschallsensor (251a) und einen zweiten Ultraschallsensor (251b) umfasst, die so konfiguriert sind, dass sie Ultraschallwellen auf jeweils unterschiedliche Bereiche der Heckklappe in der Offenstellung aussenden, wobei sich der Bereich, der mit einer Ultraschallwelle des zweiten Ultraschallsensors (251b) bestrahlt wird, von dem Bereich unterscheidet, der mit einer Ultraschallwelle des ersten Ultraschallsensors (251a) bestrahlt wird;
die Heckklappe (212c) in der Offenstellung eine von dem zweiten Ultraschallsensor (251b) ausgesendete Ultraschallwelle mit einer geringeren Reflexionsintensität reflektiert als eine von dem ersten Ultraschallsensor (251a) ausgesendete Ultraschallwelle; und
die Durchführung der vorbestimmten Gegenmaßnahme durch die Gegenmaßnahmeneinheit (511) unterbleibt oder gestoppt wird, wenn eine Differenz zwischen der Reflexionsintensität der von dem ersten Ultraschallsensor (251a) detektierten Ultraschallwelle und der Reflexionsintensität der von dem zweiten Ultraschallsensor (251b) detektierten Ultraschallwelle größer als ein vorbestimmter Wert ist.

2. Fahrzeug-Hinderniserkennungsvorrichtung nach Anspruch 1, wobei die Gegenmaßnahmeneinheit (511) dazu konfiguriert ist, eine Warnung auszugeben, um einen Fahrer oder Mitfahrer des Fahrzeugs (1) darauf hinzuweisen, dass das Hindernis durch die Hinderniserkennungseinheit (501) erkannt wurde.

3. Fahrzeug-Hinderniserkennungsvorrichtung nach Anspruch 1 oder 2,
wobei ein Winkel einer Ultraschalleinfallsrichtung in Bezug auf einen ersten Abschnitt (S1) der Heckklappe (212c) verschieden ist von einem Winkel einer Ultraschalleinfallsrichtung in Bezug auf einen zweiten Abschnitt (S2) der Heckklappe (212c),
wobei der erste Abschnitt (S1) ein Abschnitt ist, der mit einer von dem ersten Ultraschallsensor (251a) ausgesendeten Ultraschallwelle bestrahlt wird,
wobei der zweite Abschnitt (S2) ein Abschnitt ist, der mit einer von dem zweiten Ultraschallsensor (251b) ausgesendeten Ultraschallwelle bestrahlt wird.

4. Fahrzeug-Hinderniserkennungsvorrichtung nach Anspruch 3, wobei:
die Heckklappe (212c) einen Vorsprung (215) aufweist, der im ersten Abschnitt (S1) ausgebildet ist und sich in einer geschlossenen Position von der Heckklappe (212c) nach hinten erstreckt; und
der Vorsprung (215) einen Einfallspunkt im ersten Abschnitt (S1) vor einem Einfallspunkt im zweiten Abschnitt (S2) in einer Front-Heck-Richtung des Fahrzeugs bildet, wenn sich die Heckklappe (212c) in der Offenstellung befindet,
wobei der Einfallspunkt im ersten Abschnitt (S1) ein Einfallspunkt der von dem ersten Ultraschallsensor (251a) in Richtung des ersten Abschnitts (S1) ausgesendeten Ultraschallwelle ist,
wobei der Einfallspunkt im zweiten Abschnitt (S2) ein Einfallspunkt der von dem zweiten Ultraschallsensor (251b) in Richtung des zweiten Abschnitts (S2) ausgesendeten Ultraschallwelle ist.

5. Fahrzeug-Hinderniserkennungsvorrichtung nach Anspruch 4, wobei eine gerade Linie, die den ersten Ultraschallsensor (251a) mit dem ersten Abschnitt (S1) verbindet, senkrecht zu einer Reflexionsfläche der Ultraschallwelle an dem Vorsprung (215) verläuft.

6. Fahrzeug-Hinderniserkennungsvorrichtung nach einem der Ansprüche 3 bis 5,
wobei eine gerade Linie, die den ersten Ultraschallsensor (251a) mit dem ersten Abschnitt (S1) verbindet, und eine gerade Linie, die den zweiten Ultraschallsensor (251b) mit dem zweiten Abschnitt (S2) verbindet, in einer Front-Heck-Richtung des Fahrzeugs (1) verlaufen und parallel zueinander sind.

7. Fahrzeug-Hinderniserkennungsvorrichtung nach einem der Ansprüche 1 bis 6,
wobei eine von dem ersten Ultraschallsensor (251a) auszusendende Ultraschallwelle eine höhere Intensität aufweist als eine von dem zweiten Ultraschallsensor (251b) auszusendende Ultraschallwelle.

8. Fahrzeug-Hinderniserkennungsvorrichtung nach einem der Ansprüche 1 bis 7,
wobei der erste Ultraschallsensor (251a) auf einer Innenseite in Fahrzeugbreitenrichtung und der zweite Ultraschallsensor (251b) auf einer Außenseite in Fahrzeugbreitenrichtung angeordnet ist.

9. Fahrzeug-Hinderniserkennungsvorrichtung nach einem der Ansprüche 1 bis 8, wobei:
die Heckklappe (212c) dazu konfiguriert ist, eine Ladefläche (21) des Fahrzeugs (1) zu öffnen und zu schließen, eine in Fahrzeugbreitenrichtung ausgebildete Drehwelle aufweist, die sich entlang einer Bodenfläche (211) der Ladefläche (21) erstreckt, die Bodenfläche (211) in einer geschlossenen Position umschließt, und so konfiguriert ist, dass sie um die Drehwelle von der geschlossenen Position in eine Offenstellung in einer nach hinten abfallenden Richtung drehbar ist; und
die Vielzahl von Ultraschallsensoren (251a, 251b) unterhalb der Drehwelle vorgesehen ist und nebeneinander in Fahrzeugbreitenrichtung an einer Rückwand (241) angeordnet ist,
die Teil des Fahrzeugs (1) ist und sich in Fahrzeugbreitenrichtung erstreckt.

## Revendications

1. Appareil de détection d'obstacle de véhicule qui est doté :
d'une pluralité de capteurs à ultrasons (251a, 251b) configurés pour émettre des ondes ultrasonores vers l'arrière d'un véhicule (1) ; et d'une porte arrière (212c) commutable dans une position ouverte, dans laquelle la propagation des ondes ultrasonores émises par les capteurs à ultrasons (251a, 251b) dans une direction de transmission est au moins partiellement obstruée par la porte arrière,
l'appareil de détection d'obstacle de véhicule comprenant :
une unité de détection d'obstacle (501) configurée pour détecter un obstacle existant derrière le véhicule (1) sur la base de sorties respectives des capteurs à ultrasons (251a, 251b) ;
une unité de contre-mesure d'obstacle (511) configurée pour mettre en œuvre une contre-mesure prédéterminée contre l'obstacle lorsque l'obstacle est détecté par l'unité de détection d'obstacle (501), dans lequel :
la pluralité de capteurs à ultrasons (251a, 251b) comportent un premier capteur à ultrasons (251a) et un second capteur à ultrasons (251b) configurés pour émettre des ondes ultrasonores vers des parties respectives de la porte arrière dans la position ouverte, la partie irradiée par une onde ultrasonore provenant du second capteur à ultrasons (251b) étant différente de la partie irradiée par une onde ultrasonore provenant du premier capteur à ultrasons (251a) ;
la porte arrière (212c) dans la position ouverte réfléchit une onde ultrasonore émise par le second capteur à ultrasons (251b) avec une intensité de réflexion inférieure à l'intensité de réflexion d'une onde ultrasonore émise par le premier capteur à ultrasons (251a) ; et
la mise en œuvre de la contre-mesure prédéterminée par l'unité de contre-mesure d'obstacle (511) est évitée ou arrêtée lorsqu'une différence entre l'intensité de réflexion de l'onde ultrasonore détectée par le premier capteur à ultrasons (251a) et l'intensité de réflexion de l'onde ultrasonore détectée par le second capteur à ultrasons (251b) devient supérieure à une valeur prédéterminée.

2. Appareil de détection d'obstacle de véhicule selon la revendication 1,
dans lequel l'unité de contre-mesure d'obstacle (511) est configurée pour produire un avertissement pour inciter un conducteur ou un passager du véhicule (1) à reconnaître que l'obstacle est détecté par l'unité de détection d'obstacle (501).

3. Appareil de détection d'obstacle de véhicule selon la revendication 1 ou la revendication 2,
dans lequel un angle d'une direction incidente ultrasonore par rapport à une première partie (S1) de la porte arrière (212c) est différent d'un angle d'une direction incidente ultrasonore par rapport à une seconde partie (S2) de la porte arrière (212c), la première partie (S1) étant une partie à irradier par une onde ultrasonore émise par le premier capteur à ultrasons (251a),
la seconde partie (S2) étant une partie à irradier par une onde ultrasonore émise par le second capteur à ultrasons (251b).

4. Appareil de détection d'obstacle de véhicule selon la revendication 3, dans lequel :
la porte arrière (212c) a une saillie (215) qui est formée dans la première partie (S1) et se prolonge vers l'arrière à partir de la porte arrière (212c) dans une position fermée ; et
la saillie (215) forme un point incident dans la première partie (S1) en avant d'un point incident dans la seconde partie (S2) dans une direction avant-arrière du véhicule dans un état où la porte arrière (212c) est dans la position ouverte,
le point incident dans la première partie (S1) étant un point incident de l'onde ultrasonore émise par le premier capteur à ultrasons (251a) vers la première partie (S1),
le point incident dans la seconde partie (S2) étant un point incident de l'onde ultrasonore émise par le second capteur à ultrasons (251b) vers la seconde partie (S2).

5. Appareil de détection d'obstacle de véhicule selon la revendication 4,
dans lequel une ligne droite connectant le premier capteur à ultrasons (251a) et la première partie (S1) est perpendiculaire à une surface de réflexion de l'onde ultrasonore sur la saillie (215).

6. Appareil de détection d'obstacle de véhicule selon l'une quelconque de la revendication 3 à la revendication 5,
dans lequel une ligne droite connectant le premier capteur à ultrasons (251a) et la première partie (S1) et une ligne droite connectant le second capteur à ultrasons (251b) et la seconde partie (S2) se prolongent dans une direction avant-arrière du véhicule (1) et sont parallèles l'une à l'autre.

7. Appareil de détection d'obstacle de véhicule selon l'une quelconque de la revendication 1 à la revendication 6,
dans lequel une onde ultrasonore à émettre par le premier capteur à ultrasons (251a) est plus élevée en intensité qu'une onde ultrasonore à émettre par le second capteur à ultrasons (251b).

8. Appareil de détection d'obstacle de véhicule selon l'une quelconque de la revendication 1 à la revendication 7,
dans lequel le premier capteur à ultrasons (251a) est situé sur un côté interne dans un sens de la largeur du véhicule et le second capteur à ultrasons (251b) est situé sur un côté externe dans le sens de la largeur du véhicule.

9. Appareil de détection d'obstacle de véhicule selon l'une quelconque de la revendication 1 à la revendication 8, dans lequel :
la porte arrière (212c) est configurée pour ouvrir et fermer une plateforme de chargement (21) du véhicule (1), a un arbre rotatif formé dans un sens de la largeur du véhicule le long d'une surface de plancher (211) de la plateforme de chargement (21), entoure la surface de plancher (211) dans une position fermée, et est configuré pour pouvoir tourner autour de l'arbre rotatif de la position fermée à la position ouverte dans une direction de chute vers l'arrière ; et
la pluralité de capteurs à ultrasons (251a, 251b) sont prévus sous l'arbre rotatif et sont agencés côte à côte dans le sens de la largeur du véhicule sur une paroi arrière (241) qui fait partie du véhicule (1) et se prolonge dans le sens de la largeur du véhicule.
